Europäisches Patentamt

European Patent Office

Office européen des brevets

(19)

(11) Veröffentlichungsnummer: **0 189 565 B1**

## EUROPÄISCHE PATENTSCHRIFT

(12)

(45) Veröffentlichungstag der Patentschrift: **07.11.90**

(21) Anmeldenummer: **85115686.9**

(22) Anmeldetag: **10.12.85**

(51) Int. Cl.⁵: **F 01 P 7/16,** G 05 D 23/13

(54) **Kühlwasserregler für Brennkraftmaschinen.**

(30) Priorität: **29.01.85 DE 3502817**

(43) Veröffentlichungstag der Anmeldung:
**06.08.86 Patentblatt 86/32**

(45) Bekanntmachung des Hinweises auf die
Patenterteilung:
**07.11.90 Patentblatt 90/45**

(84) Benannte Vertragsstaaten:
**FR GB IT SE**

(56) Entgegenhaltungen:
**DE-A-1 451 669**
**DE-A-2 603 924**
**DE-A-3 315 308**
**GB-A-2 086 536**

**PATENT ABSTRACTS OF JAPAN, Band 9, Nr.**
**275 (M-426)1998r, 2. November 1985; & JP-A-60**
**119 319 (NIHON THERMOSTAT K.K.) 26-06-1985**

(73) Patentinhaber: **Gustav Wahler GmbH u. Co**
**Hindenburgstr. 146**
**D-7300 Esslingen (DE)**

(72) Erfinder: **Wahler, Dieter, Dipl.-Ing.**
**Esslinger Strasse 65**
**D-7300 Esslingen (DE)**

(74) Vertreter: **Kratzsch, Volkhard, Dipl.-Ing.**
**Mülbergerstrasse 65**
**D-7300 Esslingen (DE)**

## Beschreibung

Die Erfindung bezieht sich auf einen Kühlwasserregler für Brennkraftmaschinen der im Oberbegriff des Anspruchs 1 definierten Art.

Bei einem bekannten Kühlwasserregler der eingangs genannten Art (GB-A-20 86 536) hat der Dehnstoffthermostat einen festgelegten Ansprechbereich, der durch dessen Dimensionierung und Kalibrierung vorgegeben ist. Das Widerlager weist eine Unterdruckdose auf, deren Unterdruckkammer mit der Ansaugseite der Brennkraftmaschine verbunden werden kann und deren die Unterdruckkammer abschließendes, federbelastetes und bewegliches Element über einen Kolben und einen daran angelenkten Schwenkhebel eine von letzterem verschiebbare Lageranordnung betätigen kann, die mit dem Stößel des Dehnstoffthermostaten in Verbindung steht. Eine Veränderung des Unterdrucks in der Unterdruckdose bewirkt somit über diese mechanischen Übertragungselemente eine Translationsverschiebung des Stößels des Dehnstoffthermostaten. Ber Tothub im Dehnstoffthermostaten ist dadurch gebildet, daß in dessen Gehäuse eine den Stößel umfassende Hülle enthalten ist, die eine endseitig kegelförmige Aussparung hat. Zwischen dem Gehäuse und der Hülle befindet sich in einem Ringraum der Dehnstoff. Bei kalter Brennkraftmaschine ist der Tothub im Dehnstoffthermostaten wirksam. Das Widerlager befindet sich in der ganz zurückgezogenen Ausgangsstellung. Somit ist das Thermostatventil geschlossen und der Mediumdurchfluß gesperrt, der lediglich über einen Bypaß unter Umgehung des Kühlers direkt zur Brennkraftmaschine zurückgelangen kann. Steigt die Kühlwassertemperatur, dehnt sich der Dehnstoff im Dehnstoffthermostaten aus, wodurch die Hülle so zusammengedrückt wird, daß deren zusammengedrücktes Ende der Aussparung sich an das kegelförmige Ende des Stößels anlegt. Dadurch wird der Dehnstoffthermostat mitsamt dem daran gehaltenen Ventilglied relativ zum Stößel bewegt. Das Ventilglied wird vom Ventilsitz abgehoben und somit das Ventil geöffnet, so daß nun der Mediumdurchfluß zwischen Brennkraftmaschine und Kühler erfolgen kann. Zugleich wird der Bypaß geschlossen. Nimmt die Belastung der Brennkraftmaschine zu, so steigt die Kühlwassertemperatur weiterhin an. Zugleich wird dabei der Unterdruck in der Ansaugleitung der Brennkraftmaschine erhöht. Dadurch kann die Unterdruckdose über den Hebelmechanismus den Stößel des Dehnstoffthermostaten und damit dessen Gehäuse mit Ventilglied weiter in Ventilöffnungsrichtung verschieben. Dieser bekannte Kühlwasserregler hat hinsichtlich des Dehnstoffthermostaten nur einen vorgegebenen Öffnungstemperaturbereich. Dieser ist von der Ansprechtemperatur des Dehnstoffs im Gehäuse und durch die Kalibrierung des Dehnstoffthermostaten vorgegeben. Der integrierte Tothub ist durch die relative Einstellung zwischen der Unterdruckdose und dem Dehnstoffthermostaten immer vorhanden. Er ist nicht veränderbar.

Es ist ferner ein Kühlwasserregler bekannt (DE-A-33 15 308), dessen Dehnstoffthermostat durch Verstellung des Widerlagers eines Stößels bezüglich seiner Öffnungstemperatur verstellbar und anpaßbar an unterschiedliche Größen ist. Damit ist es möglich, z.B. zwei unterschiedliche Öffnungstemperaturen für das Thermostatventil zu verwirklichen, so daß z.B. bei niedrigen Außentemperaturen das Thermostatventil erst bei einer höheren Temperatur öffnet, dagegen bei hohen Außentemperaturen schon bei einer deutlich niedrigeren Temperatur öffnen kann, so daß eine zulässige Betriebstemperatur der Brennkraftmaschine nicht überschritten wird. Das gleiche wird bei einem aus der DE-A-14 51 669 bekannten Kühlwasserregler erreicht, der zwei koaxial angeordnete Thermostate aufweist, die zu einem Aggregat vereinigt sind und auf das gleiche Ventil arbeiten, wobei diese zwei Thermostate auf Temperatureinflüsse verschieden ansprechen. Der eine Thermostat ist als Niedertemperaturthermostat (Sommerthermostat) ausgebildet. Der andere Thermostat ist als Hochtemperaturthermostat (Winterthermostat) ausgebildet, wobei dieser am verstellbaren Widerlager abgestützt ist und in der oberen, an den Kühler der Brennkraftmaschine anschließbaren Gehäusekammer angeordnet ist. Diese bekannten Kühlwasserregler arbeiten mit einer äußeren Steuereinrichtung zur Verstellung des Widerlagers.

Der Erfindung liegt die Aufgabe zugrunde, einen Kühlwasserregler für Brennkraftmaschinen der im Oberbegriff des Anspruchs 1 genannten Art so auszubilden, daß zwei unterschiedliche Öffnungstemperaturen des Thermostatventiles bei möglichst einfacher, kostengünstiger und vor allem gedrängter, kompakter Bauweise erreicht werden, wobei das Thermostatventil ein in sich geschlossenes, fertigmontiertes und justiertes Teilbilden soll, das en bloc eingesetzt und ausgetauscht werden kann, und wobei selbsttätig in Abhängigkeit von den jeweiligen Betriebstemperaturen die Einschaltung der jeweiligen Öffnungstemperatur geschieht.

Die Aufgabe ist bei einem Kühlwasserregler für Brennkraftmaschinen nach der Gattung des Patentanspruchs 1 erfindungsgemäß durch die Merkmale im Kennzeichnungsteil des Anspruchs 1 gelöst.

Weitere vorteilhafte Maßnahmen dazu ergeben sich aus den Ansprüchen 2—23.

Durch das vorgesehene zusätzliche Dehnstoffelement mit höherer Ansprechcharakteristik ist erreicht, daß das Thermostatventil zwei verschiedene Ansprechtemperaturen haben kann, und zwar bei nicht wirksamen, ausgeschaltetem Tothub eine niedrige Ansprechtemperatur und bei eingeschaltetem und somit wirksamen Tothub eine demgegenüber höhere Ansprechemperatur. Spricht das zusätzliche Dehnstoffelement bei Erreichen der Ansprechtemperatur seines Dehnstoffes an, so erfährt dessen Dehnstoff eine Volumenausdehnung, die auf den anderen Dehnstoff des Dehnstoffthermostaten im Sinne einer dortigen zusätzlichen Volumenausdehnung einwirkt. Dann spricht das Thermostatventil durch Relativverschiebung zwischen dem Gehäuse und dem Stößel im Sinne einer Ventilöffnung an. Ist der Tothub dagegen ausgeschaltet, also unwirksam, so spricht das Thermostatventil schon dann im Sinne einer Ventilöffnung an, wenn das Kühlwasser eine Temperatur in der Größenordnung der Ansprechtemperatur des Dehnstoffs des ersten Dehnstoffelementes hat. Der Kühlwasserregler ist z.B. so einstellbar, daß das Thermostatventil eine niedrige Öffnungstemperatur etwa zwischen 70°C und 85°C bei ausgeschaltetem Tothub und eine demgegenüber höhere Öffnungstemperatur, z.B. zwischen etwa 85°C und 100°C, bei eingeschaltetem Tothub hat. Die höhere Öffnungstemperatur kann natürlich auch z.B. zwischen 100°C bis 115°C liegen. Der Tothub ist über das Widerlager einschaltbar und ausschaltbar. Er ist selbsttätig dann eingeschaltet, wenn die Brennkraftmaschine noch nicht Betriebstemperatur hat, also in der Anlauf- und Warmlaufphase, bei niedrigen Außentemperaturen oder dergleichen. Dann ist das Thermostatventil geschlossen, so daß das Kühlwasser von der Brennkraftmaschine über einen Bypaß unter Umgehung des Kühlers direkt zur Brennkraftmaschine zurückgeführt wird, und zwar solange, bis im Kühlwasserregler der Dehnstoffthermostat zunächst den Tothub ohne Stellbewegung durchlaufen hat. Bei Erreichen der genannten anderen, höheren Ansprechtemperatur, z.B. in der Größenordnung zwischen 100°C bis 115°C, wird dann aufgrund des Ansprechens des zusätzlichen Dehnstoffelements das Thermostatventil geöffnet. Die Ausschaltung des Tothubs kann in einfacher Weise durch Eindrücken des Stößels des Thermostatventils mittels des Widerlagers geschehen, was sowohl in Abhängigkeit vom Kühlwasser mittels eines temperaturabhängigen Arbeitselements, insbesondere Dehnstoffelements, als auch über andere mechanische Stelleinrichtungen oder außenliegende Steuereinrichtungen geschehen kann, und bei letzteren in Abhängigkeit auch von äußeren Größen, statt der Temperatur des Kühlwassers. Durch die Erfindung ist bei äußerst einfacher, kompakter und billiger Bauweise des Kühlwasserreglers erreicht, daß das Thermostatventil zwei Öffnungstemperaturen hat, wobei die Voraussetzungen für eine selbsttätige Einstellung in Abhängigkeit vom Medium, insbesondere Kühlwasser, erfüllt sind.

Fortsetzung: Ursprüngliche Beschreibung, S. 4—14.

Die Erfindung ist nachfolgend anhand von in den Zeichnungen gezeigten Ausführungsbeispielen näher erläutert. Es zeigen:

Fig. 1 eine schematische, zum Teil geschnittene Seitenansicht eines Kühlwasserreglers gemäß einem ersten Ausführungsbeispiel,

Fig. 2 eine schematische, zum Teil geschnittene Seitenansicht etwa entsprechend derjenigen in Fig. 1 eines Kühlwasserreglers mit äußerer Stsuereinrichtung, gemäß einem zweiten Ausführungsbeispiel.

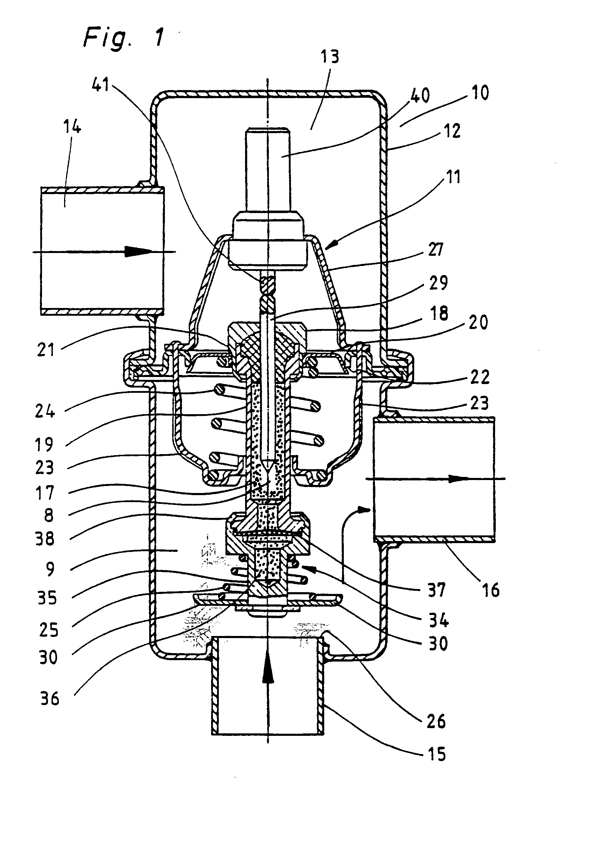

Fig. 1 zeigt einen Kühlwasserregler 10 für Brennkraftmaschinen mit einem üblichen Thermostatventil 11, das in ein Gehäuse 12 eingebaut ist und dieses in eine in Fig. 1 obere Gehäusekammer 13 und untere Bypass Gehäusekammer 9 unterteilt, die bei geschlossenem Thermostatventil 11, wie gezeigt, voneinander getrennt sind und bei geöffnetem Thermostatventil 11 miteinander in Verbindung stehen. Ein am Gehäuse 12 sitzender Stutzen 14 enthält einen Mediumzuflußkanal, über den Kühlwasser vom nicht gezeigten Kühler der Brennkraftmaschine in die obere Gehäusekammer 13 eingeleitet wird. Der temperaturempfindliche Teil des Thermostatventiles 11 sitzt innerhalb der unteren Bypass-Gehäusekammer 9, in die über einen Stutzen 15 ein Bypass-Kanal hineinführt und von der über einen Stutzen 16 ein Rückflußkanal abgeht, Der Bypass-Kanal führt Kühlwasser, das über einen Bypass von der zum Kühler führenden Leitung, die von der Brennkraftmaschine herkommt, abzweigt, Das Kühlwasser passiert die Bypass-Gehäusekammer 9, aus der es über den Rückflußkanal im Stutzen 16 zurück zur Brennkraftmaschine geleitet wird.

Das Thermostatventil 11 weist einen Dehnstoffthermostaten 18 auf, dessen Gehäuse 19 das Ventilglied des Thermostat ventiles 11 in Form eines Ventiltellers 20 trägt, der an einer Gehäuseschulter 21 in Öffnungsrichtung abgestützt ist. Der Ventilteller 20 wirkt mit einem Ventilsitz 22 zusammen, der ebenfalls Teil des Thermostatventiles 11 ist. Zwischen zwei herabhängenden Armen 23 und dem Ventilteller 20 befindet sich eine Rückstellfeder 24, die den Ventilteller 20 und das Gehäuse 19 des Dehnstoffthermostaten 18 in Fig. 1 nach obendrückt, wobei der Ventilteller 20 mit dem Ventilsitz 22 zu dessen Verschluß zusammenwirkt. Am Gehäuse 19 des Dehnstoffthermostaten 18 ist an dessen unterem Ende ein freiverschieblicher Ventilteller 30 gegen die Wirkung einer Feder 25 gehalten, der mit einem Ventilsitz 26 im Bereich der inneren Öffnung des Stutzens 15 zusammenwirkt und den Bypass steuert.

Am in Fig. 1 oberen Ende trägt das Thermostatventil 11 einen Bügel 27 mit zentraler Öffnung, in der beim ersten Ausführungsbeispiel ein temperaturabhängiges Arbeitselement 40 koaxial zum Thermostatventil 11 gehalten ist, wobei der Arbeitskolben 41 des Arbeitselementes 40 in Fig. 1 nach unten hin und zum Dehnstoffthermostaten 18 hin vorsteht.

Der Dehnstoffthermostat 18 enthält in seinem Gehäuse 19 einen sich bei Temperaturerhöhung ausdehnenden Dehnstoff 17, z.B. Wachs. In den Dehnstoff 17 und das Gehäuse 19 taucht ein dazu koaxialer Stößel 29 ein, der in Fig. 1 oben aus dem Gehäuse 19 herausgeführt ist und am dazu koaxialen Arbeitskolben 41 als dessen Widerlager axial Abstützung findet.

Bei normaler Ausbildung des Dehnstoffthermostaten 18 ist die Wirkungsweise des Thermostatventiles 11 wie folgt. Zunächst wird das Kühlwasser über die Stutzen 15 und 16 durch die Bypass-Gehäusekammer 9 hindurchgeführt, solange die Brennkraftmaschine sich noch nicht auf Betriebstemperatur erwärmt hat. Erreicht die Temperatur des Kühlwassers in der Bypass-Gehäusekammer 9 die Ansprechtemperatur des Thermostatventiles 11, dehnt sich der Dehnstoff 17 im Gehäuse 19 aus mit einhergehender Volumenzunahme. Aufgrund letzterer wird das Gehäuse 19 relativ zum Stößel 29 in Fig. 1 nach unten verschoben, unter Mitnahme des an der Gehäuseschulter 21 anliegenden Ventiltellers 20, und dies gegen die Wirkung der Rückstellfeder 24. Der Ventilteller 20 hebt dabei ab vom Ventilsitz 22. Das Thermostatventil 11 öffnet. Zugleich sitzt der Ventilteller 30 auf dem Ventilsitz 26 auf und verschließt die Bypass-Öffnung des Stutzens 15. Das Kühlwasser nimmt nun den Weg durch den Stutzen 14, die Gehäusekammern 13 und 9 und verläßt das Gehäuse 12 durch den Stutzen 16.

Die Besonderheit des Kühlwasserreglers 10 liegt in folgendem, Der Dehnstoffthermostat 18 weist einen integrierten Tothub auf, der über das Widerlager in Form des Arbeitskolbens 41 ein- und ausschaltbar ist. Fig. 1 zeigt den eingeschalteten Zustand des Tothubes. Erreicht der Dehnstoffthermostat 18, wie zuvor beschrieben, seine Ansprechtemperatur, so wird der Tothub zunächst durchfahren, ohne daß eine Relativverschiebung zwischen dem Stößel 29 einerseits und dem Gehäuse 19 andererseits des Dehnstoffthermostaten 18 geschieht, also ohne Abheben des Ventiltellers 20. Dieser im eingeschalteten Zustand durchfahrbare Tothub des Dehnstoffthermostaten 18 hat eine Erhöhung der eine Relativverschiebung zwischen Stößel 29 und Gehäuse 19 bedingenden Ansprechtemperatur des Dehnstoffthermostaten 18 zur Folge.

Dieser Tothub ist in seinem eingeschalteten Zustand durch Volumenverschiebung im Inneren des Dehnstoffthermostaten 18, insbesondere durch Volumenausdahnung, durchfahrbar. Der Tothub hat sine Volumenausdehnungskapazität, die einem sonstigen Hub von z.B. etwa 8 mm entspricht. Der Tothub des Dehnstoffthermostaten 18 ist folgendermaßen gebildet. Ausgehend von einem solchen Dehnstoffthermostaten, der auf eine vorgesehene Ansprechtemperatur kalibriert ist, ist der Tothub durch Volumenreduzierung des in den Dehnstoff 17 eintauchenden Stößels 29 in dessen Endbereich und/oder des Dehnstoffes 17 selbst gebildet. Um dies zumindest in etwa anzudeuten, ist hierzu in Fig. 1 unterhalb des Stößels 29 ein Freiraum 8 gezeigt. Dieser soll nur symbolisch den Leerraum verdeutlichen, der für diesen Tothub in der Füllung mit Dehnstoff 17 vorhanden ist, wobei tatsächlich jedoch sich dieser Leerraum gleichmäßig über die gesamte Füllung mit Dehnstoff 17 im Gehäuse 19 verteilt. Der Dehnstoffthermostat 18 ist also bezüglich der Füllung mit Dehnstoff 17 und des in diesen eintauchenden Endes des Stößels 29 so kalibriert, daß bei Erreichen der Ansprechtemperatur des Dehnstoffes 17 sich dieses im Gehäuse 19 ausdehnen kann, ohne daß bei eingeschaltetem Tothub eine Relativverschiebung zwischen Stößel 29 und Gehäuse 19 mit einhergehender Ventilöffnung geschieht.

Der Dehnstoff 17 des Dehnstoffthermostaten 18 weist z.B. eine Ansprechtemperatur etwa zwischen 70°C und 85°C auf. Bei eingeschaltetem Tothub, wie Fig. 1 zeigt, wird also bei Erreichen dieser Ansprechtemperatur der Tothub durchfahren, ohne daß über den Dehnstoff 17 eine Relativverschiebung zwischen Gehäuse 19 und Stößel 29 erfolgt. Bei ausgeschaltetem Tothub dagegen ist der Dehnstoffthermostat 18 in der Lage, bei Erreichen der Ansprechtemperatur etwa zwischen 70°C und 85°C normal zu arbeiten, d.h., daß dann der Dehnstoff 17 im Gehäuse 19 eine Volumenausdehnung erfährt und sich am Stößel 29 abstützt, so daß bei über das Widerlager 41 fest abgestütztem Stößel 29 sich das Gehäuse 19 mitsamt dem Ventilteller 20 relativ zum Stößel 29 in Fig, 1 nach unten verschiebt und das Thermostatventil 11 geöffnet wird.

Der Dehnstoffthermostat 18 trägt an seinem dem Ventilsitz 22 abgewandten Ende des Gehäuses 19 ein zusätzliches Dehnstoffelement 34. Dieses weist ein etwa topfartiges Gehäuse 35 mit innerer Kammer auf, in der ein Dehnstoff 36, z.B. Wachs, enthalten ist, wobei die Kammer mittels einer elastischen Membran 37 dicht verschlossen ist. Das Gehäuse 35 ist direkt an das Gehäuse 19 des Dehnstoffthermostaten 18 angesetzt und mit diesem z.B. durch Umbördeln des Bördelrandes 38 verbunden. Die Membran 37 ist zwischen dem Stirnende des Gehäuses 19 einerseits und dem Gehäuse 35 andererseits angeordnet und randseitig geklemmt gehalten, so daß der Dehnstoff 36 und 17 nicht entweichen kann. Das Innere das Gehäuses 19, das den Dehnstoff 17 enthält, reicht bis hin zur Membran 37 und ist durch letztere endseitig verschlossen. Die Membran 37 trennt also den einen Dehnstoff 17 mit eigener Ansprechcharakteristik vom anderen Dehnstoff 36. Der Dehnstoff 36 hat z.B. eine Ansprechtemperatur etwa zwischen 100°C und 115°C, Dieses zusätzliche Dehnstoffelement 34 hat damit eine höhere Ansprechcharakteristik als der Dehnstoffthermostat 18. Es ist durch den Zusammenbau und die Trennung über die elastische Membran 37 dem Dehnstoffthermostaten 18 im Sinne einer Erhöhung der Ansprechtemperatur des Thermostatventiles 11 bei eingeschaltetem Tothub aufgeschaltet, Damit hat das Thermostatventil 11 bei ausgeschaltetem Tothub eine Ansprechtemperatur etwa zwischen 70°C und 85°C, dagegen bei dem in Fig. 1 gezeigten eingeschalteten Tothub eine Ansprechtemperatur etwa zwischen 100°C und 115°C, Spricht das zusätzliche Dehnstoffelement 34 bei Erreichen der Ansprechtemperatur seines Dehnstoffes 36, also etwa in der Größenordnung zwischen 100°C und 115°C, an, so erfährt dessen Dehnstoff 36 eine Volumenausdehnung und wirkt über die sich in Fig. 1 nach oben auswölbende Membran 37 auf den anderen Dehnstoff 17 im Gehäuse 19 des Dehnstoffthermostaten 18 im Sinne einer dortigen zusätzlichen Volumenausdehnung ein. Dann spricht das Thermostatventil 11 durch Relativverschiebung zwischen dem Gehäuse 19 und dem Stößel 29 im Sinne einer Ventilöffnung an.

Dies hat zur Folge, daß bei eingeschaltetem Tothub gemäß Fig. 1 das Thermostatventil 11 erst dann im Sinne einer Ventilöffnung anspricht und der Ventilteller 20 unter Ventilöffnung vom Ventilsitz 22 abhebt, wenn das Kühlwasser in der Gehäusekammer 9 die Ansprechtemperatur des Dehnstoffes 36 des zusätzlichen Dehnstoffelementes 34 erreicht hat, die etwa zwischen 100°C und 115°C liegt. Das Thermostatventil 11 öffnet bei eingeschaltetem Tothub also erst etwa zwischen 100°C und 115°C.

Ist der Tothub dagegenausgeschaltet, so spricht das Thermostatventil 11 im Sinne einer Ventilöffnung schon dann an, wenn das die Gehäusekammer 9 passierende Kühlwasser eine Temperatur in der Größenordnung der Ansprechtemperatur des Dehnstoffes 17, also etwa zwischen 70°C und 85°C, hat.

Das Thermostatventil 11 hat mithin zumindest zwei Öffnungstemperaturen, und zwar eine niedrige Öffnungstemperatur zwischen etwa 70°C und 85°C bei ausgeschaltetem Tothub und eine demgegenüber höhere Öffnungstemperatur zwischen etwa 85°C und 100°C bei eingeschaltetem Tothub.

Der Tothub wird über das Widerlager in Form des Arbeitskolbens 41 eingeschaltet und ausgeschaltet.

Bei einem nicht gezeigten Ausführungsbeispiel besteht dieses Widerlager aus irgend einem mechanischen Element, an dem sich der Stößel 29 mit seinem Ende abstützen kann, wobei dieses Element entweder von Hand oder mittels irgend einer geeigneten Steuereinrichtung in Abhängigkeit irgendwelcher äußerer Größen verstellbar ist. Die Gestaltung kann hier genauso getroffen sein, wie z.B. in der DE-OS 33 15 308 beschrieben ist.

Beim gezeigten Ausführungsbeispiel in Fig. 1 ist das Widerlager vom Arbeitskolben 41 des thermostatischen Arbeitselementes 40 gebildet, wobei dieses Widerlager temperaturabhängig über das Arbeitselement 40 verstellbar ist. Dieses hat eine Ansprechtemperatur, die deutlich unter derjenigen des Dehnstoffes 17 des Dehnstoffthermostaten 18 liegt. Z.B. beträgt die Ansprechschwelle des temperaturabhängigen Arbeitselementes etwa zwischen 60°C bis 80°C. Das thermostatische Arbeitselement 40 ist praktisch genauso aufgebaut wie der Dehnstoffthermostat 18, wobei lediglich das dem Dehnstoffthermostaten 18 am unteren Ende angefügte Dehnstoffelement 34 beim thermostatischen Arbeitselement 40 nicht vorhanden ist. Da das thermostatische Arbeitselement 40 innerhalb der oberen Gehäusekammer 13 angeordnet ist, arbeitet es in Abhängigkeit von der Temperatur des Kühlwassers, das durch den Stutzen 14 hindurch in die Gehäusekammer 13 eingeleitet wird, d.h. in Abhängigkeit vom vom Kühler her kommenden Kühlwasser.

Beim in Fig. 1 gezeigten Zustand ist der Tothub eingeschaltet. Das Thermostatventil 11 ist geschlossen. Solange das über die Stutzen 15 und 16 durch die Kammer 9 hindurchgeführte Kühlwasser eine Temperatur unterhalb der Ansprechtemperatur des Dehnstoffes 17 hat, reagiert letzterer überhaupt nicht. Wird die Ansprechtemperatur von etwa 70°C bis 85°C des Dehnstoffes 17 erreicht, hat dessen Erwärmung eine Volumenausdehnung zur Folge.

Der Dehnstoff 17 dehnt sich sodann aus, wobei die Volumenausdehnung dem integrierten Tothub entspricht, d.h. die Volumenausdehnung des Dehnstoffes 17 noch nicht zu einer Relativverschiebung zwischen Gehäuse 19 und Stößel 29 führt. Der Dehnstoff 17 dehnt sich also ohne Ventilverschiebung aus und macht den vorhandenen Tothub zu Null unter Beseitigung des Freiraumes 8. Erhöht sich die Temperatur des Kühlwassers in der Gehäusekammer 9 bis hin zur Ansprechtemperatur von etwa 100°C bis etwa 115°C des Dehnstoffes 36 des zusätzlichen Dehnstoffelementes 34, dehnt sich der Dehnstoff 36 aus mit einhergehender Auswölbung der Membran 37 in das Innere des Gehäuses 19 hinein mit dortiger Verschiebung des Dehnstoffes 17. Dadurch verschiebt sich das Gehäuse 19 mitsamt dem Ventilteller 20 gegen die Rückstellfeder 24 relativ zum Stößel 29, der nach wie vor am Widerlager in Form des Arbeitskolbens 41 abgestützt ist, in Fig. 1 nach unten. Das Thermostatventil 11 öffnet.

Beim Öffnen des Thermostatventiles 11 und bei erreichtem ausreichend großem Öffnungshub erreicht der Ventilteller 30 den Ventilsitz 26. Der Bypass des Kanales 15 wird verschlossen. Das Kühlwasser passiert nun, eingeleitet über den Stutzen 14, die Kammer 13 und 19 und verläßt letztere über den Stutzen 16. In dieser Stellung nimmt das Kühlwasser seinen Weg von der Brennkraftmaschine zum Kühler, durch diesen und zurück zur Brennkraftmaschine. Dieser Betriebszustand bis zum Öffnen des Thermostatventiles 11 macht es also möglich, die Brennkraftmaschine bis hin zu einer Kühlwassertemperatur etwa in der Größenordnung zwischen 100°C bis 150°C auf Betriebstemperatur zu bringen, bevor die Kühlung über den Kühler geschieht.

In Folge des Kühlwassers, das auf das thermostatische Arbeitselement 40 einwirkt und die Ansprechtemperatur dieses in der Größenordnung etwa zwischen 60°C und 80°C erreicht, spricht das Arbeitselement 40 an. Der Arbeitskolben 41 wird in Fig. 1 nach unten ausgeschoben. Da gleichzeitig im Bereich der Gehäusekammer 9 die Temperatur absinkt und der Dehnstoff 17 sowie der Dehnstoff 36 unter Volumenreduzierung abkühlen, wird durch das Ausschieben des Arbeitskolbens 41 der Tothub des Dehnstoffthermostaten 18 ausgeschaltet, nämlich zu Null gemacht, denn das Ausschieben des Arbeitskolbens 41 als Widerlager für den Stößel 29 führt zu einer entsprechenden Verschiebung des Stößels 29 in das Innere des Gehäuses 19 hinein unter Kompensierung des Freiraumes 8. Da nun der Dehnstoff 17 sich bereits bei Erreichen seiner Ansprechtemperatur z.B. von ca.70°C bis 85°C ausdehnt wird das Gehäuse 19 relativ zum Stößel 29 in die Ventilöffnungsstellung verschoben. Das Thermostatventil 11 ist also geöffnet. Dieser Zustand entspricht z.ß. dem Betrieb der Brennkraftmaschine bei Vollast, hohen Außentemperaturen od.dgl.

Bei Abkühlung stellt sich das Arbeitselement 40 wieder in die in Fig. 1 gezeigte Ausgangsstellung zurück, in der der Tothub des Dehnstoffthermostaten 18 wieder eingeschaltet ist. Auch der Dehnstoffthermostat 18 mit zusätzlichem Dehnstoffelement 34 stellen sich in die Ausgangslage gemäß Fig. 1 zurück. Bei Kaltstart der Brennkraftmaschine und während der Warmlaufphase bleibt das Thermostatventil 11 geschlossen, so daß das Kühlwasser unter Überbrückung des Kühlers im Bypass von der Brennkraftmaschine zu dieser zurückgeführt wird, bis bei zunehmender Temperatursteigerung in der Gehäusekammer 9 die Ansprechtemperatur des Dehnstoffes 17 erreicht ist, der Tothub durch den Dehnstoff 17 durchfahren wurde und hiernach die noch höhere Ansprechtemperatur etwa zwischen 100°C bis 115°C des Dehnstoffes 36 erreicht wurde und daraufhin das Thermostatventil 11 erst öffnet.

Wenn vorstehend zur Erläuterung der einzelnen Ansprechtemperaturen jeweils Werte angegeben sind, so verstehen sich diese nur beispielshalber, um den Erfindungsgegenstand zu verdeutlichen. Es versteht sich, daß die Ansprechtemperatur auch in anderen Größenordnungen liegen können.

Bei einem anderen, nicht gezeigten Ausführungsbeispiel ist statt des unten angesetzten zusätzlichen Dehnstoffelementes 34 dieses in einfacher Weise aus einem mit einem Dehnstoff 36 anderer Charakteristik gefüllten Kammerteil des Gehäuses 19 des Dehnstoffthermostaten 18 gebildet, wobei dieser Kammerteil, der diesen Dehnstoff 36 enthält, vom übrigen Inneren des Gehäuses 19, das den anderen Dehnstoff 17 enthält, mittels eines eingesetzten Trennteiles abgeteilt ist. Der Trennteil kann in einfacher Weise aus einem Kolben, Stopfen, einer elastischen Membran od.dgl. gebildet sein.

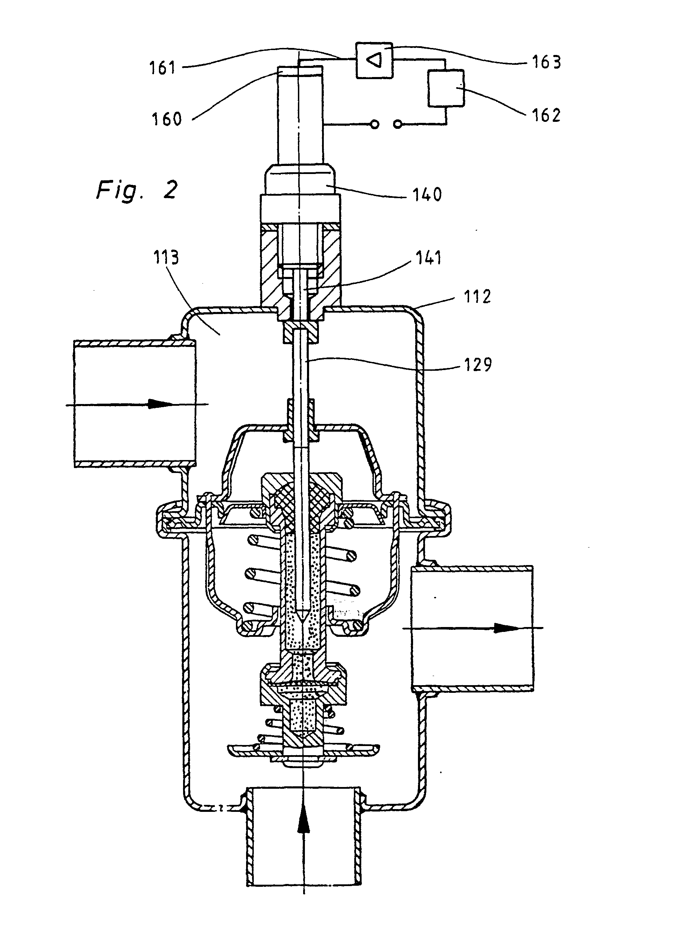

Bei dem in Fig. 2 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Beim zweiten Ausführungsbeispiel ist das Widerlager für den Stößel 129 ebenfalls von einem Bolzen 141, z.B. Arbeitskolben, eines thermostatischen Arbeitselementes 140 gebildet. Jedoch ist dieses thermostatische Arbeitselement 140 nicht innerhalb der Gehäusekammer 113 und im Strom des zugeführten, vom Kühler herkommenden Kühlwassers angeordnet, sondern es ist außerhalb des Inneren am Gehäuse 112 plaziert. Das Arbeitselement 140 bildet hier also eine äußere Steuereinrichtung. Es weist ein äußeres elektrisches Heizelement auf, das hier z.B. aus einem PTC-Widerstand 160 besteht. Dieser wird aus einem elektrischen Versorgungskreis 161 gespeist, der seinerseits einen Meßwiderstand 162 in Form eines PTC-Elementes oder NTC-Elementes aufweist und über einen Meßwertverstärker 163 auf den PTC-Widerstand 160 arbeitet. Diese Gestaltung entspricht derjenigen gemäß DE-OS 33 15 308.

**Patentansprüche**

1. Kühlwasserregler für Brennkraftmaschinen, mit einem den Mediumdurchfluß regelnden Thermostatventil (11), das ein von einem Dehnstoffthermostaten (18) betätigtes, mit einem Ventilsitz (22) zusammenwirkendes Ventilglied (20) aufweist, wobei der Dehnstoffthermostat (18) als einen Teil ein Gehäuse (19) mit einem sich bei Temperaturerhöhung ausdehnenden Dehnstoff (17) und als anderen Teil einen in den Dehnstoff (17) eintauchenden Stößel (29) aufweist, von denen der eine Teil mittels eines Widerlagers (41) abgestützt ist, das zur Verstellung der Öffnungstemperatur verstellbar ist, und von denen der andere Teil, relativ zum abgestützten Teil unter der Wirkung des sich ausdehnenden Dehnstoffes (17) gegen die Wirkung einer Rückstellfeder (24) mitsamt dem Ventilglied (20) ausschiebbar ist, und wobei der Dehnstoffthermostat (18) einen vom Widerlager (41) her ein- und ausschaltbaren, integrierten Tothub aufweist, der in seinem eingeschalteten Zustand bei Erreichen der Ansprechtemperatur des Dehnstoffes (17) im Dehnstoffthermostaten (18) ohne Relativverschiebung zwischen Stößel (29) und Gehäuse (19) durchfahrbar ist und eine Erhöhung der eine Relativverschiebung zwischen Stößel (29) und Gehäuse (19) bedingenden Ansprechtemperatur des Dehnstoffthermostaten (18) zur Folge hat, dadurch gekennzeichnet, daß der Dehnstoffthermostat (18) am Ende des den Dehnstoff (17) enthaltenden Gehäuses (19) ein zusätzliches Dehnstoffelement (34) mit höherer Ansprechcharakteristik aufweist, das dem Dehnstoffthermostater (18) im Sinne einer Erhöhung seiner Ansprechtemperatur aufgeschaltet ist, derart, daß der Dehnstoff (36) des zusätzlichen Dehnstoffelementes (34) bei Ansprechen eine Volumenausdehnung erfährt und auf den Dehnstoff (17) im Gehäuse (19) des Dehnstoffthermostaten (18) im Sinne einer zusätzlichen Volumenausdehnung dort einwirkt.

2. Kühlwasserregler nach Anspruch 1, dadurch gekennzeichnet, daß der Tothub in seinem eingeschalteten Zustand durch Volumenverschiebung, insbesondere Volumenausdehnung, des Dehnstoffes (17) durchfahrbar ist.

3. Kühlwasserregler nach Anspruch 2, dadurch gekennzeichnet, daß der Tothub des Dehnstoffthermostaten (18) eine einem sonstigen Hub von etwa 8 mm entsprechende Volumenausdehnungskapazität hat.

4. Kühlwasserregler nach einem der Ansprüche 1—3, dadurch gekennzeichnet, daß der Tothub des Dehnstoffthermostaten (18), ausgehend von einem solchen, der auf eine vorgesehene Ansprechtemperatur eingestellt ist, durch Volumenreduzierung des in den Dehnstoff (17) eintauchenden Stößels (29) im Eintauchbereich und/oder des Dehnstoffes (17) gebildet ist.

5. Kühlwasserregler nach einem der Ansprüche 1—4, dadurch gekennzeichnet, daß der Dehnstoffthermostat (18) bei ausgeschaltetem Tothub eine Ansprechtemperatur etwa zwischen 70°C und 85°C und bei eingeschaltetem Tothub etwa zwischen 100°C und 115°C aufweist.

6. Kühlwasserregler nach einem der Ansprüche 1—5, dadurch gekennzeichnet, daß das Arbeitsintervall des Dehnstoffthermostaten (18), dem nach durchlaufenem eingeschaltetem Tothub ein Arbeitshub zugeordnet ist, etwa in der Größenordnung von 100°C bis 115°C als untere Grenze und von etwa 115°C bis 130°C als obere Grenze liegt.

7. Kühlwasserregler nach Anspruch 1, dadurch gekennzeichnet, daß der Dehnstoff (36) des zusätzlichen Dehnstoffelementes (34) eine Ansprechtemperatur etwa zwischen 100°C und 115°C hat.

8. Kühlwasserregler nach Anspruch 1, dadurch gekennzeichnet, daß das Arbeitsintervall des zusätzlichen Dehnstoffelementes (34) etwa in der Größenordnung von 100°C bis 115°C als untere Grenze und von etwa 115°C bis 130°C als obere Grenze liegt.

9. Kühlwasserregler nach einem der Anspruche 1—8, dadurch gekennzeichnet, daß das zusätzliche Dehnstoffelement (34) ein etwa topfartiges Gehäuse (35) aufweist, das innerhalb einer Kammer Dehnstoff (36) enthält, die mittels einer elastischen Membran (37) dicht verschlossen ist.

10. Kühlwasserregler nach Anspruch 9, dadurch gekennzeichnet, daß das Gehäuse (35) des zusätzlichen Dehnstoffelementes (34) an das freie Ende des Gehäuses (19) des Dehnstoffthermostaten (18) angesetzt und mit diesem z.B. durch Bördeln (38) verbunden ist.

11. Kühlwasserregler nach Anspruch 9 oder 10, dadurch gekennzeichnet, daß die Membran (37) zwischen dem Stirnende des Gehäuses (19) des Dehnstoffthermostaten (18) einerseits und dem Gehäuse (35) des zusätzlichen Dehnstoffelementes (34) andererseits angeordnet und randseitig geklemmt gehalten ist.

12. Kühlwasserregler nach Anspruch 10 oder 11, dadurch gekennzeichnet, daß das Innere des Gehäuses (19) des Dehnstoffthermostaten (18), das den Dehnstoff (17) enthält, bis hin zur Membran (37) reicht und durch diese endseitig verschlossen ist.

13. Kühlewasserregler nach einem der Ansprüche 1—8, dadurch gekennzeichnet, daß das zusätzliche Dehnstoffelement aus einem mit Dehnstoff (36) gefüllten Kammerteil des Gehäuses (19) des Dehnstoffthermostaten (18) gebildet ist, der vom den übrigen Dehnstoff (17) enthaltenden Inneren des Gehäuses (19) mittels eines dicht eingesetzten Trennteiles abgeteilt ist.

14. Kühlwasserregler nach Anspruch 13, dadurch gekennzeichnet, daß der Trennteil aus einem Kolben, Stopfen, einer elastischen Membran od.dgl. gebildet ist.

15. Kühlwasserregler nach einem der Ansprüche 1—14, dadurch gekennzeichnet, daß das Widerlager aus dem Stellglied eines temperaturabhängigen Arbeitselementes (40) gebildet ist.

16. Kühlwasserregler nach Anspruch 15, dadurch gekennzeichnet, daß das Widerlager aus einem zum Stößel (29) des Dehnstoffthermostaten (18) koaxialen Bolzen (41) gebildet ist, an dem sich der Stößel (29) abstützt.

17. Kühlwasserregler nach Anspruch 16, dadurch gekennzeichnet, daß der Bolzen (41) aus dem herausgeführten Arbeitskolben eines zweiten Dehnstoffelementes (40) gebildet ist.

18. Kühlwasserregler nach einem der Ansprüche 15—17, dadurch gekennzeichnet, daß das temperaturabhängige Arbeitselement (40), insbesondere das zweite Dehnstoffelement, eine Ansprechtemperatur aufweist, die deutlich unterhalb derjenigen des Dehnstoffthermostaten (18) liegt.

19. Kühlwasserregler nach Anspruch 18, dadurch gekennzeichnet, daß die Ansprechtemperatur des thermostatischen Arbeitselementes (40) etwa zwischen 60°C bis 80°C liegt.

20. Kühlwasserregler nach einem der Ansprüche 15—19, dadurch gekennzeichnet, daß das temperaturabhängige Arbeitselement (40) auf der Seite des Ventilgliedes (20) und Ventilsitzes (22) im Mediumstrom angeordnet ist, die dem Dehnstoffthermostat (18) abgewandt ist.

21. Kühlwasserregler nach einem der Ansprüche 1—19, dadurch gekennzeichnet, daß der Dehnstoffthermostat (18) in einer Bypass-Gehäusekammer (9) des Thermostatventiles (11) angeordnet ist, in die ein Bypass-Kanal (15) einmündet und von der ein damit in Verbindung stehender Rückflußkanal (16) abgeht, wobei der Bypass-Kanal (15) der Zuführung des Mediums von der Brennkraftmaschine in die Bypass-Gehäusekammer (9) und der Rückflußkanal (16) der Abführung daraus zurück zur Brennkraftmaschine dienen.

22. Kühlwasserregler nach einem der Ansprüche 15—21, dadurch gekennzeichnet, daß das temperaturabhängige Arbeitselement (40) in einer auf der anderen Seite des Ventilsitzes (22) befindlichen Gehäusekammer (13) angeordnet ist, in die ein Mediumzuflußkanal (14) einmündet, der dem Zufluß des Mediums vom Kühler in das Thermostatventil (11) dient.

23. Kühlwasserregler nach einem der Ansprüche 1—22, dadurch gekennzeichnet, daß der Dehnstoffthermostat (18) an dem Ende, das dem Ventilglied (20) gegenüberliegt, innerhalb der BypassGehäusekammer (9) einen Ventilteller (30) trägt, der dem Bypass-Kanal (15) zugeordnet ist und mittels dessen ein Ventilsitz (26) des Bypass-Kanales (15) bei geöffnetem Thermostatventil (11) verschließbar ist.

## Revendications

1. Régulateur d'eau de refroidissement pour moteurs à combustion interne, comprenant une soupape thermostatique (11) qui règle le débit de fluide et présente un organe de soupape (20) actionné par un thermostat à matière expansible (18) et coopérant avec un siège de soupape (22), le thermostat à matière expansible (18) comportant comme l'un des éléments un boîtier (19) avec une matière expansible (17) qui se dilate sous l'effet d'une élévation de la température et comme autre élément un poussoir (29) plongeant dans la matière expansible (17), l'un des éléments étant soutenu au moyen d'une butée (41) qui est réglable pour la variation de la température d'ouverture et l'autre élément, y compris l'organe de soupape (20), pouvant être poussé vers l'extérieur par rapport à l'élément soutenu, sous l'effet de la dilatation de la matière expansible (17) et contre l'action d'un ressort de rappel (24), et le thermostat à matière expansible (18) présentant une course morte intégrée qui peut être activée et désactivée par la butée (41) et franchie, à l'état activé, dès l'atteinte de la température de réponse de la matière expansible (17) dans le thermostat à matière expansible (18), sans déplacement relatif entre le poussoir (29) et le boîtier (19), avec pour conséquence une augmentation de la température de réponse du thermostat à matière expansible (18) qui conditionne un déplacement relatif entre le poussoir (29) et le boîtier (19), caractérisé en ce que le thermostat à matière expansible (18) comporte, à l'extrémité du boîtier (19) contenant la matière expansible (17), un élément à matière expansible supplémentaire (34) d'une caractéristique de réponse plus élevée lequel est couplé au thermostat à matière expansible (18) dans le sens d'une augmentation de la température de réponse de ce dernier, de sorte que la matière expansible (36) de l'élément à matière expansible supplémentaire (34) subit lors de la réponse une dilatation volumique et agit sur la matière expansible (17) dans le boîtier (19) du thermostat à matière expansible (18) dans le sens d'une dilatation volumique supplémentaire.

2. Régulateur d'eau de refroidissement selon la revendication 1, caractérisé en ce que, à l'état activé, la course morte peut être franchie par le déplacement du volume, en particulier par la dilatation volumique, de la matière expansible (17).

3. Régulateur d'eau de refroidissement selon la revendication 2, caractérisé en ce que la course morte du thermostat à matière expansible (18) a une capacité de dilatation volumique qui correspond à une course quelconque d'environ 8 mm.

4. Régulateur d'eau de refroidissement selon l'une des revendications 1 à 3, caractérisé en ce que, en partant d'un thermostat réglé sur une température de réponse prévue, la course morte du thermostat à matière expansible (18) est réalisée par une réduction du volume du poussoir (29) plongeant dans la matière expansible (17) dans la zone de plongée, et/ou de la matière expansible (17).

5. Régulateur d'eau de refroidissement selon l'une des revendications 1 à 4, caractérisé en ce que, à l'état désactivé de la course morte, le thermostat à matière expansible (18) a une température de réponse comprise entre environ 70°C et 85°C et d'environ 100°C à 115°C à l'état activé de la course morte.

6. Régulateur d'eau de refroidissement selon, une des revendications 1 à 5, caractérisé en ce que l'intervalle de travail du thermostat à matière expansible (18) auquel est associé, après le franchissement de la course morte activée, une course de travail, se situe approximativement dans l'ordre de grandeur de 100°C à 115°C comme limite inférieure et d'environ 115°C à 130°C comme limite supérieure.

7. Régulateur d'eau de refroidissement selon la revendication 1, caractérisé en ce que la matière expansible (36) de l'élément à matière expansible supplémentaire (34) a une température de réponse comprise entre environ 100°C et 115°C.

8. Régulateur d'eau de refroidissement selon la revendication 1, caractérisé en ce que l'intervalle de travail de l'élément à matière expansible supplémentaire (34) se situe approximativement dans l'ordre de grandeur de 100°C à 115°C comme limite inférieure et d'environ 115°C à 130°C comme limite supérieure.

9. Régulateur d'eau de refroidissement selon l'une des revendications 1 à 8, caractérisé en ce que l'élément à matière expansible supplémentaire (34) comprend un boîtier (35) en forme de pot qui contient de la matière expansible (36) à l'intérieur d'une chambre fermée de manière étanche au moyen d'une membrane élastique (37).

10. Régulateur d'eau de refroidissement selon la revendication 9, caractérisé en ce que le boîtier (35) de l'élément à matière expansible supplémentaire (34) est rattaché à l'extrémité libre du boîtier (19) du thermostat à matière expansible (18) et relié à celui-ci, par exemple par sertissage (38).

11. Régulateur d'eau de refroidissement selon l'une des revendications 9 ou 10 caractérisé en ce que la membrane (37) est disposée entre la face frontale du boîtier (19) du thermostat à matière expansible (18) d'une part et le boîtier (35) de l'élément à matière expansible supplémentaire (34) d'autre part et que son bord est immobilisé par serrage.

12. Régulateur d'eau de refroidissement selon l'une des revendications 10 ou 11, caractérisé en ce que l'intérieur du boîtier (19) du thermostat à matière expansible (18) contenant la matière expansible (17) s'étend jusqu'à la membrane (37) et qu'il est fermé à l'extrémité par ladite membrane.

13. Régulateur d'eau de refroidissement selon l'une des revendications 1 à 8, caractérisé en ce que l'élément à matière expansible supplémentaire est constitué par une section de chambre du boîtier (19) du thermostat à matière expansible (18), remplie de matière expansible (36), laquelle section de chambre est séparée de l'espace intérieur du boîtier (19) contenant l'autre matière expansible (17) au moyen d'un élément de séparation inséré de manière étanche.

14. Régulateur d'eau de refroidissement selon la revendication 13, caractérisé en ce que l'élément de séparation est constitué par un piston, un bouchon, une membrane élastique ou analogues.

15. Régulateur d'eau de refroidissement selon l'une des revendications 1 à 14, caractérisé en ce que la butée est constituée par l'organe de réglage d'un élément de travail (40) dépendant de la température.

16. Régulateur d'eau de refroidissement selon la revendication 15, caractérisé en ce que la butée est constituée par une broche (41) disposée coaxialement par rapport au poussoir (29) du thermostat à matière expansible (18), sur laquelle prend appui ledit poussoir (29).

17. Régulateur d'eau de refroidissement selon la revendication 16, caractérisé en ce que la broche (41) est constituée par le piston de travail sorti d'un second élément à matière expansible (40).

18. Régulateur d'eau de refroidissement selon l'une des revendications 15 à 17, caractérisé en ce que l'élément de travail (40) dépendant de la température, en particulier le second élément à matière expansible, présente une température de réponse qui est nettement inférieure à celle du thermostat à matière expansible (18).

19. Régulateur d'eau de refroidissement selon la revendication 18, caractérisé en ce que la température de réponse de l'élément de travail thermostatique (40) se situe entre environ 60°C et 80°C.

20. Régulateur d'eau de refroidissement selon l'une des revendications 15 à 19, caractérisé en ce que l'élément de travail (40) dépendant de la température est disposé dans le courant de fluide, du côté de l'organe de soupape (20) et du siège de soupape (22) qui est opposé au thermostat à matière expansible (18).

21. Régulateur d'eau de refroidissement selon l'une des revendications 1 à 19, caractérisé en ce que le thermostat à matière expansible (18) est disposé dans une chambre de dérivation du boîtier (9) de la soupape thermostatique (11) dans laquelle débouche un canal de dérivation (15) et de laquelle part un canal de refluement (16) en communication avec ce dernier, le canal de dérivation (15) étant destiné à amener le fluide du moteur à combustion interne dans la chambre de dérivation du boîtier (9) et le canal de refluement (16) assurant le retour de ladite chambre vers le moteur à combustion interne.

22. Régulateur d'eau de refroidissement selon l'une des revendications 15 à 21, caractérisé en ce que l'élément de travail (40) dépendant de la température est disposé dans une chambre de boîtier (13) située de l'autre côté du siège de soupape (22) et dans laquelle débouche un canal d'arrivée de fluide (14) qui sert à amener le fluide du radiateur dans la soupape thermostatique (11).

23. Régulateur d'eau de refroidissement selon l'une des revendications 1 à 22, caractérisé en ce que le thermostat à matière expansible (18) porte à l'extrémité opposée à l'organe de soupape (20), à l'intérieur de la chambre de dérivation du boîtier (9), une tête de soupape (30) qui est associée au canal de dérivation (15) et à l'aide de laquelle peut être fermé un siège de soupape (26) du canal de dérivation (15) lorsque la soupape thermostatique (11) est ouverte.

## Claims

1. A cooling water regulator for internal combustion engines with a thermostatic valve (11) which regulates the flow of medium and which has a valve member (20) actuated by an expansion thermostat (18) and cooperating with a valve seat (22), the expansion thermostat (18) having, as one element a housing (19) with a material (17) which expands with the rise of temperature, and, as another element, a tappet (29) immersed in the expanding material, of which two elements one is supported by means of a thrust block (41) while the other element is displaceable relative to the supported element under the action of the expanding material (17) against the action of a return spring (24) together with the valve member (20), and the expansion thermostat (18) having an integrated dead travel able to be switched on and off from the thrust block (41) which can be performed in its switched on state on reaching the response temperature of the expansion material (17) in the expansion thermostat (18) without relative displacement between tappet (29) and housing (19), and results in an increase of the response temperature of the expansion thermostat (18) bringing about a relative displacement between tappet (29) and housing (19), characterized in that the expansion thermostat (18) has at the end of the housing (19) containing the expansion material (17) an additional expansion material element (34) with higher response characteristic which is locked on the expansion thermostat (18) correspondingly to an increase of its response temperature in such a manner that the expansion material (36) of the additional expansion material element (34) experiences on response an expansion of volume and influences the expansion material (17) in the housing (19) of the expansion thermostat (18) in the sense of an additional expansion of volume.

2. A cooling water regulator according to claim 1, characterized in that the dead travel in its switched on state can be performed by volume displacement, particularly volume expansion, of the expansion material (17).

3. A cooling water regulator according to claim 2, characterized in that the dead travel of the expansion thermostat (18) has a volume expansion capacity corresponding to a further travel of some 8 mm.

4. A cooling water regulator according to one of claims 1 to 3, characterized in that the dead travel of the expansion thermostat (18), starting from a travel which is set according to a programmed response temperature, is constituted by the reduction in volume of the tappet (29) immersed in the expansion material (17) in the immersion area and/or of the expansion material (17).

5. A cooling water regulator according to claims 1 to 4, characterized in that the expansion thermostat (18) when the dead travel is switched off has a response temperature substantially between 70°C and 85°C, and when the dead travel is switched on, substantially between 100°C and 115°C.

6. A cooling water regulator according to one of claims 1 to 5, characterized in that the operating range of the expansion thermostat (18) to which an operating stroke is associated after the switched on dead travel has been performed is comprised substantially within the order of magnitude from 100°C to 115°C as lower limit, and-substantially 115°C to 130°C as upper limit.

7. A cooling water regulator according to claim 1, characterized in that the expansion material (36) of the additional expansion material element (34) has a response temperature substantially between 100°C and 115°C.

8. A cooling water regulator according to claim 1, characterized in that the operating range of the additional expansion material element (34) is comprised substantially within the order of magnitude from 100°C to 115°C as lower limit, and substantially 115°C to 130°C as upper limit.

9. A cooling water regulator according to one of claims 1 to 8, characterized in that the additional expansion material element (34) has a substantially pot-like housing (35) which contains expansion material (36) inside a chamber which is sealingly closed by means of an elastic membrane (37).

10. A cooling water regulator according to claim 9, characterized in that the housing (35) of the additional expansion material element (34) is mounted on the free end of the housing (19) of the expansion thermostat (18) and is connected with the latter e.g. by flanges (38).

11. A cooling water reactor according to claim 9 or claim 10, characterized in that the membrane (37) is mounted between the front end of the housing (19) of the expansion thermostat (18) on the one hand, and the housing (35) of the additional expansion material element (34) on the other hand, and is held clamped at the edge.

12. A cooling water regulator according to claim 10 or claim 11, characterized in that the inside of the housing (19) of the expansion thermostat (18) which contains the expansion material (17) extends as far as the membrane (37) and is closed at the end by the latter.

13. A cooling water regulator according to one of claims 1 to 8, characterized in that the additional expansion material element is constituted by a section of the chamber of the housing (19) of the expansion thermostat (18) filled with expansion material (36) and which is separated by means of a sealingly mounted partitioning part from the inside of the housing (19) containing the remaining expansion material (17).

14. A cooling water regulator according to claim 13, characterized in that the partitioning part is formed by a piston, plug, elastic membrane or the like.

15. A cooling water regulator according to one of claims 1 to 14, characterized in that the thrust block is constituted by the servo component of a temperature dependent working element (40).

16. A cooling water regulator according to claim 15, characterized in that the thrust block is constituted by a bolt (41) coaxial with the tappet (29) of the expansion thermostat (18) upon which the tappet (29) acts.

17. A cooling water regulator according to claim 16, characterized in that the bolt (41) is constituted by the brought out operating piston of a second expansion material element (40).

18. A cooling water regulator according to one of claims 15 to 17, characterized in that the temperature-dependent working element (40), particularly the second expansion material element, has a response temperature which is clearly below that of the expansion thermostat (18).

19. A cooling water regulator according to claim 18, characterized in that the response temperature of the thermostatic working element (40) is comprised substantially between 60°C and 80°C.

20. A cooling water regulator according to one of claims 15 to 19, characterized in that the temperature-dependent working element (40) is mounted in the flow of medium on the side of the valve member (20) and valve seat (22) facing away from the expansion thermostat (18).

21. A cooling water regulator according to one of claims 1 to 19, characterized in that the expansion thermostat (18) is mounted in a by-pass housing chamber (9) of the thermostat valve (11) into which a by-pass channel (15) opens out and from which a return flow channel (16) connected therewith starts, the by-pass channel (15) being used for the ducting of the medium from the internal combustion engine into the by-pass housing chamber (9) and the return flow channel (16) being used for the ducting away therefrom back to the internal combustion engine.

22. A cooling water regulator according to one of claims 15 to 21, characterized in that the temperature-dependent working element (40) is mounted in a housing chamber (13) situated on the other side of the valve seat (22) into which there opens a medium supply channel (14) which is used for the ducting of the medium from the cooler into the thermostat valve (11).

23. A cooling water regulator according to one of claims 1 to 22, characterized in that the expansion thermostat (18), at the end situated opposite the valve member (20), inside the by-pass housing chamber (9), supports a valve disc (30) which is associated with the by-pass channel (15), and by means of which a valve seat (16) of the by-pass channel (15) can be closed when the thermostat valve (11) is open.

Fig. 1

1

EP 0 189 565 B1

*Fig. 2*

161
163
160
162
140
113
141
112
129